# EUROPEAN PATENT APPLICATION

(11) **EP 4 800 300 A1**
(43) Date of publication of application: **02.09.2026**
(21) Application number: 26161382.2
(22) Date of filing: 27.02.2026
(51) Int. Cl.: F23R 3/00, F23R 3/06, F23R 3/50, F23R 3/54

(54) **DIFFERENTIAL COOLING IN A SMALL COMBUSTOR**

(30) Priority: 27.02.2025 IT 202500003975
(71) Applicant: GE Avio S.r.l., 10040 Rivalta di Torino (TO) (IT)
(72) Inventor: PAVAN, Mirko, 10040 Rivalta di Torino (IT); FRONTANI, Alessandro, 10040 Rivalta di Torino (IT); ABBONDANZA, Claudio, 10040 Rivalta di Torino (IT); TURRINI, Fabio, 10040 Rivalta di Torino (IT)
(74) Representative: Openshaw & Co.

(57) **Abstract**

Combustor liners (200) providing differential cooling are disclosed. An example gas turbine engine (100) includes a combustor (130) having combustor volume (V), the combustor configured to burn fuel at a fuel flow rate (FFR) to generate an engine power (*P_{engine}*); and a combustor liner having a surface area (SA) including: an inner liner (202) including a plurality of inner liner cooling holes (506) configured to provide cooling to the combustor, the plurality of inner liner cooling holes characterized by an inner liner midcup cooling hole tangential pitch/diameter (*TP*/*D_{IL,M}*) (802) between and inclusive of 6 and 16 and an inner liner centerline cooling hole tangential pitch/diameter (*TP*/*D_{IL,C}*) (804) between and inclusive of 5 and 11, wherein values for a ratio of ${\frac{TP}{D}}_{IL , M}$ to ${\frac{TP}{D}}_{IL , C}$ are greater than 1.00; an outer liner (204) including a plurality of outer liner cooling holes (606) configured to provide cooling to the combustor.

## Description

### CROSS-REFERENCE TO RELATED APPLICATIONS

This application claims priority to and the benefit of Italian Patent Application 102025000003975, filed on February 27, 2025, which is hereby incorporated by reference in its entirety.

### FIELD OF THE DISCLOSURE

This disclosure relates generally to gas turbine engines, and, more particularly, to differential cooling in a small combustor.

### BACKGROUND

Gas turbine engines include a combustion section in which air and fuel are mixed and burned to generate thrust. The combustion process generates high temperatures and flames that can cause damage to the surrounding structures in the engine. As such, typical gas turbine engines include a combustor liner to ensure efficient combustion within the combustion chamber and protect other engine structures from excessive heat.

### BRIEF DESCRIPTION OF THE DRAWINGS

FIG. 1 is a cross-sectional view of an example engine in which examples disclosed herein may be implemented.
FIG. 2 is a cross-sectional view of a portion of an example engine including an example combustor with an example combustor liner in accordance with teachings disclosed herein.
FIG. 3 is a frontal view of a portion of the combustor of FIG. 2 in accordance with teachings disclosed herein.
FIG. 4 is a frontal view of a portion of the combustor of FIG. 2 in accordance with teachings disclosed herein.
FIG. 5 is a schematic view of an example inner liner of the example combustor liner of FIG. 2 in accordance with teachings disclosed herein.
FIG. 6 is a schematic view of an example outer liner of the example combustor liner of FIG. 2 in accordance with teachings disclosed herein.
FIG. 7 is a schematic view of an example forward nuggets of the example combustor liner of FIG. 2 in accordance with teachings disclosed herein.
FIG. 8 is a graph that illustrates a relationship between inner liner midcup cooling hole tangential pitch/diameter and inner liner centerline cooling hole tangential pitch/diameter of an example combustor liner of the combustor of FIG. 2 in accordance with teachings disclosed herein.
FIG. 9 is a graph that illustrates a relationship between outer liner midcup cooling hole tangential pitch/diameter and outer liner centerline cooling hole tangential pitch/diameter of an example combustor liner of the combustor of FIG. 2 in accordance with teachings disclosed herein.
FIG. 10 is a graph that illustrates a relationship between forward nuggets midcup cooling hole tangential pitch/diameter and forward nuggets centerline cooling hole tangential pitch/diameter of an example combustor liner of the combustor of FIG. 2 in accordance with teachings disclosed herein.

The figures are not to scale. In general, the same reference numbers will be used throughout the drawings and accompanying written description to refer to the same or like parts.

### DETAILED DESCRIPTION

In the following detailed description, reference is made to the accompanying drawings that form a part hereof, and in which is shown by way of illustration specific examples that may be practiced. These examples are described in sufficient detail to enable one skilled in the art to practice the subject matter, and it is to be understood that other examples may be utilized. The following detailed description is therefore provided to describe an exemplary implementation and not to be taken as limiting on the scope of the subject matter described in this disclosure. Certain features from different aspects of the following description may be combined to form yet new aspects of the subject matter discussed below.

A turbine engine, also referred to herein as a gas turbine engine, is a type of internal combustion engine that uses atmospheric air as a moving fluid. The gas turbine engine is a turbofan engine that includes a combustion section. During operation, a portion of air is directed or routed into compressor sections where the pressure of the air is increased. The portion of air is routed into a combustion section where the pressurized air is mixed with fuel and burned to provide combustion gases. Subsequently, the combustion gases are routed through a high-pressure turbine section and a low-pressure turbine section, where a portion of thermal and/or kinetic energy from the combustion gases is extracted. The combustion gases are then routed through a jet exhaust nozzle section of the gas turbine engine to provide propulsive thrust. In this sense, the power of the gas turbine engine can be defined as a product of the overall thrust and the cruising speed of the aircraft.

The combustion section includes a plurality of fuel nozzles evenly spaced apart in the circumferential direction. The combustion section also includes a combustor liner to shield engine components from direct flames generated in the combustion section and to ensure efficiency of the combustion process. Such combustor liners include an inner liner and an outer liner. The inner liner prevents the flames from contacting the turbine shaft housing and the outer liner protects the combustor case. The inner and the outer liner hereafter described are characterized to include a single metal sheet, a double wall configuration, and/or a plurality of liner sections. The inner liner and the outer liner can include the plurality of liner sections connected in an axial direction by a plurality of nuggets. Further, each of the nuggets can join an upstream liner section with a downstream liner section. The liner sections extend in the axial direction and circumferentially around an axial centerline axis of the gas turbine engine.

Each liner section includes a plurality of cooling holes (e.g., effusion holes) to introduce airflows into the combustion section to cool the walls of the combustor liner decreasing the temperature of the combustion gases. The arrangement of the cooling holes in the liner section determines where the cooling provided by the airflows is concentrated. Thus, the specific arrangement of cooling holes within the liner can improve cooling efficiency in the liner by focusing cooling on areas of the liner that experience higher temperatures.

It is to be appreciated that the arrangement of the cooling holes can also affect the performance of the engine. That is to say, the number, size, and locations of the cooling holes in the combustor liner can increase or decrease the amount of fuel consumed, which can improve or negatively impact the performance of the gas turbine engine. Because the dimensional characteristics and arrangement of the cooling holes can affect the engine performance, certain dimensional characteristics (e.g., cooling hole tangential pitch/diameter) in the liner can be determined to maintain the performance characteristics of a gas turbine engine while improving cooling efficiency in the combustor liner.

Aspects of this disclosure generally relate to a differential distribution of cooling holes in the centerline and midcup sectors of the combustor liners of small combustors. As used herein, the term "small combustor" refers to combustors having a combustor liner surface area (SA) to combustor volume ratio of greater that 10 (ft²/ft³) (32.804 (m²/m³)). Designing the combustor liner to provide an improved cooling benefit in smaller sized combustors is a challenging process that involves many tradeoffs between the cooling provided by the combustor liner and the effects on the combustion process itself. In smaller combustors, the ratio of the combustor liner to be cooled and the volume of the combustor is bigger than in larger combustors. As such, there is less air that can be used to cool the liner, requiring an increase in cooling efficiency. In particular, improved cooling of a small combustor is accomplished when at least a uniform metal temperature of the combustor is achieved during cooling despite a variable hot air temperature distribution.

When designing a combustor liner for smaller sized combustors, there is no conventional design standard that governs the arrangement of cooling holes across different sections of the liner while also ensuring that the combustion process produces enough thrust. Conventional combustor liners can include a consistent arrangement of cooling holes across the combustor liners. As such, conventional combustor liners can fail to provide improved cooling in some areas of the liner. In particular, for the combustion process to be considered efficient the fuel flow rate over engine power is less than or equal to 0.5 pounds-mass per hour (lbm/h)/horsepower. Increasing the density of cooling hole distribution in the centerline sectors while decreasing the density of cooling holes in the midcup sectors of the liner increases cooling efficiency but also can impact the combustion process. In other words, increasing the density of cooling hole distribution near the fuel nozzles and decreasing the density of cooling hole distribution further from the fuel nozzles of the combustor can increase cooling efficiency, but impact the combustion process negatively. At a certain point, the benefits to cooling are outweighed by the negative impacts to the combustion process.

On the other hand, arrangement of cooling holes across sectors may be standardized to attempt to prevent interference with the combustion process. However, this can result in a combustor liner that does not provide improved cooling. Accordingly, there is a significant challenge in designing a combustor liner that provides improved cooling for the liner and other components of the gas turbine engine and that does not interfere with the combustion process itself.

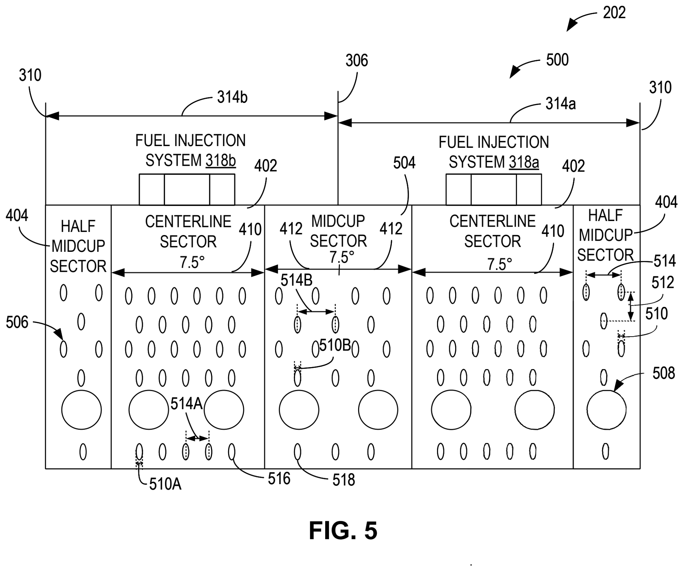

The inventors of the present application have developed improved combustor liners (e.g., an apparatus including the combustor liner). Particularly, the inventors proceeded in the manner of designing combustor liners based on dimensional characteristics of the combustor liner (e.g., inner liner centerline cooling hole tangential pitch/diameter, inner liner midcup cooling hole tangential pitch/diameter). The inventors redesigned the combustor liner to achieve particular temperature severities and corrected cooling fluxes in different sections of the liner while maintaining a maximum horsepower of the engine, which increases the cooling efficiency of the liner while maintaining engine performance standards. The inventors determined the cooling hole tangential pitch/diameter in the different regions of the liner and the temperature severity, corrected cooling flux, and maximum horsepower that resulted from the redesigned combustor liner during the design of several different types of gas turbine engines and combustor liners, including the combustor liners and engines described below in connection with FIGS. 5-7.

The inventors designed a plurality of combustors and combustor liners and evaluated performance associated with those designs. Certain improved designs created by the inventors can be characterized by a relationship between the cooling hole tangential pitch/diameter in the inner liner midcup sector and the cooling hole tangential pitch/diameter in the inner liner centerline sector, the cooling hole tangential pitch/diameter in the outer liner midcup sector and the cooling hole tangential pitch/diameter in the outer liner centerline sector, and the cooling hole tangential pitch/diameter in the forward nuggets midcup sector and the cooling hole tangential pitch/diameter in the forward nuggets centerline sector. The above relationships are characterized by ranges of values discussed below. These designs provide a particular arrangement of cooling holes within the combustor liner that improves the cooling efficiency of the combustor liner while also maintaining the performance of the engine. These embodiments are described in greater detail below.

The term "fuel injection system" refers to an assembly including a fuel nozzle and a swirler located within a combustion section of a gas turbine engine to provide fuel and air to a combustor of the gas turbine engine.

The term "centerline plane" refers to a plane that extends radially through a fuel injection system from the axial centerline axis of the gas turbine engine through a center of the fuel injection system.

The term "cup midline plane" refers to a plane that extends radially at an angle halfway between two adjacent fuel injection systems (e.g., an axis passing through a midpoint between two fuel injection systems).

The term "angular offset" refers to an angle between adjacent fuel injection systems of the combustion section.

The term "nozzle angle offset" refers to angular spacing between centerline planes of various fuel injection systems with relation to the axial centerline axis of the gas turbine engine.

The term "inner liner" refers to a portion of the liner of the combustion section located radially inward from a fuel flow passage of the combustion section.

The term "outer liner" refers to a portion of the liner of the combustion section located radially outward from the fuel flow passage of the combustion section.

The term "liner section" refers to a section of the inner liner and/or the outer liner of the combustion section that includes at least one fuel injection system.

The term "centerline sector" refers to a region of the liner section centered along the centerline plane such that the centerline plane is located at a midpoint of a pitch of the centerline sector along the wall of the combustion section (e.g., an angle of the centerline sector on each side of the centerline plane is equal, etc.).

The term "midcup sector" refers to a region of the liner section centered along the cup midline plane such that the cup midline plane is located at a midpoint of a pitch of the midline sector along the wall of the combustion section (e.g., an angle of the midcup sector on each side of the cup midline plane is equal, etc.).

The term "cooling hole tangential pitch" (TP) refers to the distance along a wall of the combustor between two cooling holes in a row of cooling holes, measured from the center point of one cooling hole to the center point of a second cooling hole. A row of cooling holes is aligned circumferentially around the axial centerline axis of the gas turbine engine.

The term "cooling hole diameter" (D) refers to a diameter of an opening (a minimum diameter) of the cooling hole.

The term "cooling hole tangential pitch/diameter" (TP/D) refers to a ratio of the cooling hole tangential pitch divided by the diameter of the cooling holes in the row. The term "inner liner centerline cooling hole tangential pitch/diameter" (TP/D*_{IL,C}*) refers to the cooling hole tangential pitch/diameter in the centerline sectors of the inner liner.

The term "inner liner midcup cooling hole tangential pitch/diameter" (TP/D*_{IL,M}*) refers to the cooling hole tangential pitch/diameter in the midcup sectors of the inner liner.

The term "outer liner centerline cooling hole tangential pitch/diameter" (TP/D*_{OL,C}*) refers to the cooling hole tangential pitch/diameter in the centerline sectors of the outer liner.

The term "outer liner midcup cooling hole tangential pitch/diameter" (TP/D*_{OL,M}*) refers to the cooling hole tangential pitch/diameter in the midcup sectors of the outer liner.

The term "forward nuggets" refers to a cooling assembly including portions connected to the inner liner and the outer liner to provide cooling air along surfaces of the inner liner and the outer liner.

The term "forward nuggets centerline cooling hole tangential pitch/diameter" (TP/D*_{FN,C}*) refers to the cooling hole tangential pitch/diameter in the centerline sectors of the forward nuggets.

The term "forward nuggets midcup cooling hole tangential pitch/diameter" (TP/D_{*FN*/*M*}) refers to the cooling hole tangential pitch/diameter in the midcup sectors of the forward nuggets.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

The terms "forward" and "aft" refer to relative positions within a gas turbine engine, pump, or vehicle, and refer to the normal operational attitude of the gas turbine engine, pump, or vehicle. For example, with regard to a gas turbine engine, forward refers to a position closer to an engine inlet and aft refers to a position closer to an engine nozzle or exhaust.

The terms "upstream" and "downstream" refer to the location along a fluid flow path relative to the direction of fluid flow. For example, with respect to a fluid flow, "upstream" refers to a location from which the fluid flows, and "downstream" refers to a location toward which the fluid flows. For example, with regard to a gas turbine engine, an engine inlet is said to be upstream of an engine outlet, and the engine outlet is said to be downstream of the engine inlet.

Various terms are used herein to describe the orientation of features. In general, some of the attached figures are annotated with a set of axes including an axis of rotation (e.g., axial axis) z and a radial axis r. In general, the attached figures can be annotated with reference to an axial direction A, a radial direction R, and/or a circumferential direction C of the vehicle associated with the features, forces, and moments. The axial direction refers to a direction parallel to the axis of rotation z about which the rotating components of a turbine engine rotate. The radial direction refers to a direction that is perpendicular to the axis of rotation and points towards (radially inward) or away from (radially outward) the axis of rotation. The circumferential direction at a given point is a direction that is normal to a local radial direction and normal to the axial direction. Reference is made to a meridional plane, which is a plane defined by a constant polar angle in cylindrical coordinates. The meridional plane refers to the plane formed by the axis of rotation and the radial axis.

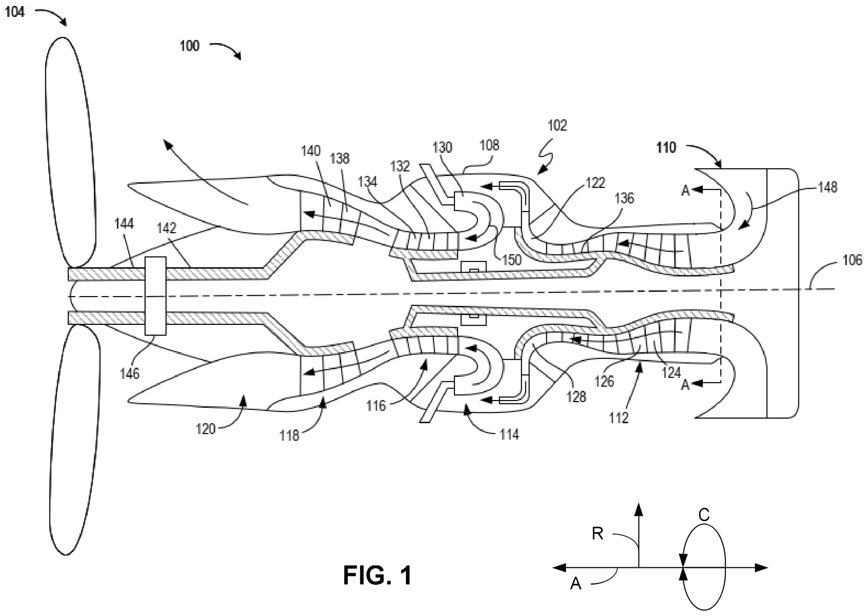

Referring now to the drawings, FIG. 1 is a schematic cross-sectional view of an example gas turbine engine 100 that can incorporate various examples disclosed herein. The example gas turbine engine 100 can be implemented on an aircraft and therefore referred to as an aircraft engine. In this example, the gas turbine engine 100 is configured as a turboprop engine. However, the principles of the present disclosure are also applicable to other types of engine configurations, such as turbofan and other engines with a nacelle or bypass duct. Further, the example principles disclosed herein can be implemented on other types of engines, such as power-generation engines.

As shown in FIG. 1, the gas turbine engine 100 includes a gas turbine 102 and a propeller 104. The gas turbine 102 can also be referred to as an engine core or turbomachinery. The gas turbine 102 is coupled to (e.g., via a drive shaft) the propeller 104 and drives the propeller 104 to produce thrust. In the illustrated example, the gas turbine engine 100 is configured such that the gas turbine 102 is disposed downstream from the propeller 104. In the illustrated example, the gas turbine engine 100 is configured as a reverse flow engine, with the inlet at the aft end of the gas turbine 102, and the exhaust at the forward end of the gas turbine 102. However, the examples disclosed herein can also be implemented in forward flow engine configurations.

As shown in FIG. 1, the gas turbine engine 100 and/or the gas turbine 102 define a longitudinal or axial centerline axis 106 extending therethrough for reference. In other words, the axial centerline axis 106 is a center line extending through the center of the gas turbine engine 100. FIG. 1 also includes an annotated directional diagram with reference to an axial direction A, a radial direction R, and a circumferential direction C. In general, as used herein, the axial direction A is a direction that extends generally parallel to the centerline axis 106, the radial direction R is a direction that extends orthogonally outward from or inward toward the centerline axis 106, and the circumferential direction C is a direction that extends concentrically around the centerline axis 106. In the illustrated example, the gas turbine 102 and the propeller 104 are coaxially arranged along the centerline axis 106. Further, as disclosed above, the gas turbine engine 100 is arranged as a reverse flow engine, in which the inlet is at the aft end (right side in FIG. 1) of the gas turbine 102, and the exhaust is at the forward end (left side in FIG. 1) of the gas turbine 102. Using a reverse flow engine configuration with an axial alignment enables a more compact propulsion system compared to a forward flow engine in combination with an offset gearbox for the propeller, because the offset gearbox must be axially separated from the engine inlet in order to provide space for the inlet duct.

The gas turbine 102 includes a substantially tubular outer casing 108 (which may also be referred to as a mid-casing) that defines an annular inlet 110. The outer casing 108 of the gas turbine 102 can be formed from a single casing or multiple casings. The outer casing 108 encloses, in serial flow relationship, a compressor section 112, a combustion section 114, a turbine section having a high pressure turbine 116 ("HP turbine 116") and a low pressure turbine 118 ("LP turbine 118"), and an exhaust section 120. An air flowpath 122 extends from the annular inlet 110 to exhaust section 120 such that compressor section 112, the combustion section 114, the turbines 116, 118, and the exhaust section 120 are in fluid communication.

In the illustrated example, the compressor section 112 includes one or more sequential stages of compressor stator vanes 124, one or more sequential stages of compressor rotor blades 126, and an impeller 128. The combustion section 114 includes a combustor 130. The HP turbine 116 includes one or more sequential stages of turbine stator vanes 132 and one or more sequential stages of turbine rotor blades 134.

The gas turbine 102 includes an HP shaft 136 that drivingly couples the HP turbine 116 and the compressor section 112 (and, in particular, the compressor rotor blades 126 and the turbine rotor blades 134). The LP turbine 118 includes one or more sequential stages of turbine stator vanes 138 and one or more sequential stages of turbine rotor blades 140. Additionally, an LP shaft 142 drivingly couples the LP turbine 118 (and, in particular, the turbine rotor blades 140) to an output shaft assembly 144. In the illustrated example, the LP shaft 142 is mechanically coupled to output shaft assembly 144 through a gearbox 146. The propeller 104 is coupled to and driven by the output shaft assembly 144. In some configurations, the compressor section 112 can include multiple compressors coupled to the turbine 116, 118 via separate drive shafts (e.g., in a coaxial or concentric arrangement).

As illustrated in FIG. 1, during operation of the gas turbine engine 100, air 148 enters the annular inlet 110 and is directed through the air flowpath 122 to the compressor section 112 where one or more sequential stages of compressor stator vanes 124 and compressor rotor blades 126 coupled to the HP shaft 136 progressively compress the air 148. The impeller 128 further compresses the air 148 and directs the compressed air 148 into the combustion section 114 where the air 148 mixes with fuel. The combustor 130 combusts the air/fuel mixture to provide combustion gases 150. The combustion gases 150 flow along the air flowpath 122 through the HP turbine 116 where one or more sequential stages of turbine stator vanes 132 and turbine rotor blades 134 coupled to the HP shaft 136 extract energy therefrom. The combustion gases 150 subsequently flow through the LP turbine 118, where an additional amount of energy is extracted through additional stages of turbine stator vanes 138 and turbine rotor blades 140 coupled to LP shaft 142. The energy extraction from HP turbine 116 supports operation of compressor section 112 through the HP shaft 136, and the energy extraction from the LP turbine 118 supports operation of the output shaft assembly 144 through the LP shaft 142. The combustion gases 150 exit air the flowpath 122 of the gas turbine 102 through the exhaust section 120.

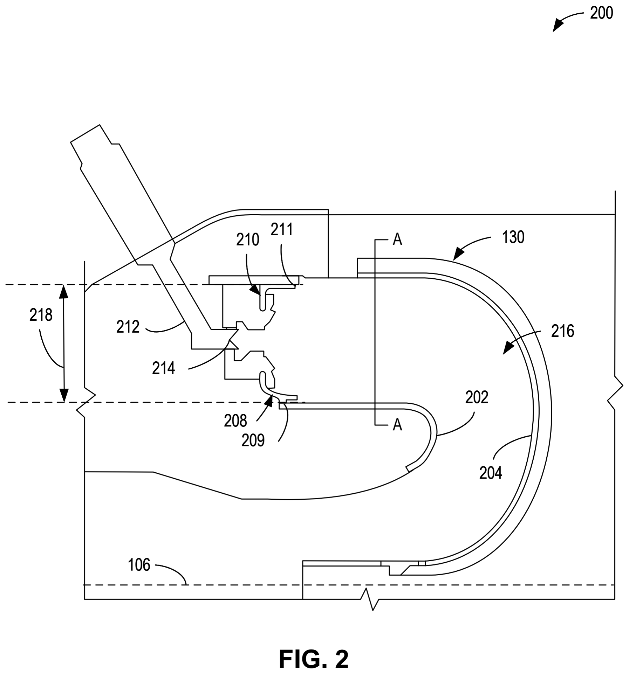

FIG. 2 is a cross-section of an example combustion section 200 including an inner liner 202 and an outer liner 204. The example combustion section 200 includes the combustor 130 of FIG. 1, the inner liner 202, the outer liner 204, inner forward nuggets 208, outer forward nuggets 210, a fuel nozzle 212, a swirler 214, and a combustion chamber 216.

The inner liner 202 and the outer liner 204 extend in the circumferential direction and the axial direction with respect to the axial centerline axis 106. In some examples, the inner liner 202 and/or the outer liner 204 are double-walled, such that the inner liner 202 and the outer liner 204 include a first wall, a second wall, and a space between the first wall and the second wall where the first wall is located radially inward of the space to the combustion chamber 216 and the second wall is located radially outward of the space in relation to the combustion chamber 216.

The inner forward nuggets 208 join an upstream section of the inner liner 202 with a downstream section of the inner liner 202. The outer forward nuggets 210 join an upstream section of the outer liner 204 with a downstream section of the outer liner 204. The inner liner 202, the outer liner 204, the inner forward nuggets 208, and the outer forward nuggets 210 include cooling holes (not illustrated in FIG. 2 but shown in FIGS. 5-7) to provide cooling within the combustor 130 and to direct airflow to the combustion chamber 216.

The dome height 218 of the combustor 130 is the distance measured radially between an end 211 of the outer forward nuggets 210 and an end 209 of the inner forward nuggets 208. A plurality of fuel nozzles 212 and a plurality of swirlers 214 are evenly spaced apart in the circumferential direction (only one of each is shown in FIG. 2). The plurality of fuel nozzles 212 provide fuel into the combustion chamber 216, where the plurality of swirlers 214 mix the fuel with air. The mixture of air and fuel is ignited to create power and generate large amounts of heat. The heat generated in the combustion process can cause damage to other components in the engine 100. In order to prevent damage to critical engine 100 components and to ensure proper operation of the engine 100, a cooling mechanism is required. As such, the cooling holes shown in FIGS. 5-7 cool the engine 100 of the heat generated in the combustion process.

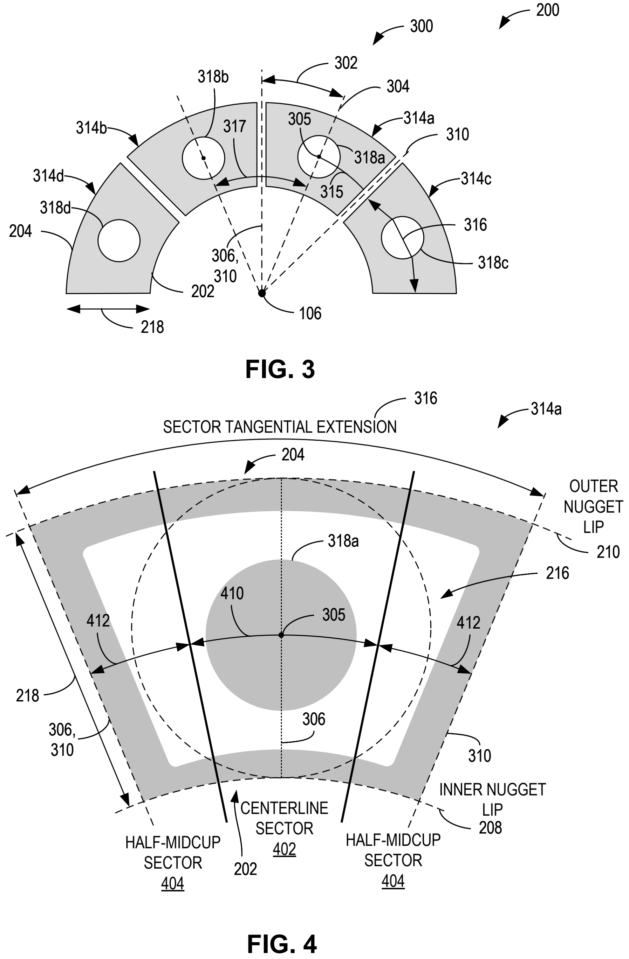

FIG. 3 is a perspective view of a portion 300 along the A-A cut line of the combustion section 200 of FIG. 2. The combustion section 200 includes fuel nozzle sectors 314a-d, each fuel nozzle sector 314a-d corresponds to one of a plurality of fuel injection systems 318a-d centered at respective centerlines 304 of the fuel nozzle sectors 314a-d. Accordingly, each fuel injection system 318a-d includes a respective centerline 304. In some examples, the fuel injection systems 318a-d include the fuel nozzle 212 and the swirler 214 and/or any other combustion device.

As shown in the illustrated example of FIG. 3, the fuel injection system 318a is defined by the centerline 304 that extends through a center 305 of the fuel injection system 318a and is located along a centerline plane of the fuel injection system 318a. The center 305 of the fuel injection system 318a refers to a radial center point of the fuel injection system 318a-d. Therefore, the centerline 304 of the fuel injection system 318a extends radially from the axial centerline axis 106 of the gas turbine engine 100 through the center 305 of the fuel injection system 318a. Accordingly, the fuel injection system 318a is located along the centerline 304 with respect to a radial centerline plane 306 of the gas turbine engine 100 such that center 305 of the fuel injection system 318a is centered along the centerline 304.

An angular offset 317 corresponds to an angle between centerlines 304 of two adjacent fuel injection systems 318 a,b. Accordingly, the angular offset 317 between centerlines is the nozzle angle offset between adjacent fuel injection systems 318a-d. In the illustrated example of FIG. 3, the angular offset 317 between adjacent fuel injection systems 318a,b is 45 degrees. Further, half of the angular offset 317 corresponds to an angular offset 302 between the centerline 304 and the radial centerline plane 306.

Cup midlines 310 extend radially from the axial centerline axis 106 of the gas turbine engine 100 halfway (midway) between two adjacent fuel injection systems 318a-c with respect to the radial centerline plane 306. An angle between two cup midlines is equivalent to the angular offset 317 and/or twice the value of the angular offset 302. Further, the fuel nozzle sectors 314a-d have a sector tangential extension 316 that corresponds to the arc length of the angular distance between cup midlines 310 of adjacent fuel nozzle sections 314a-d. In other words, a width of the sector tangential extension 316 between two cup midlines 310 is equivalent to two half sector widths 315 (e.g., double the half sector width 315, a sum of two half sector widths 315) from the center 305 to the cup midline 310.

The combustion section 200 can include ten nozzles to twenty nozzles. However, in other examples, the combustion section 200 can include any number of nozzles. Following the above example, the combustion section 200 including ten fuel nozzles can have angular offsets (as shown by the angular offset 317) of 18, 54, 90, 126, 162, 198, 234, 270, 306, and 342 degrees, respectively, and cup midline angles (equivalent to the angle value of the angular offset 317 extending between midlines 310) of 36, 72, 108, 144, 180, 216, 252, 288, 324, and 0/360 degrees, respectively. In the example above, the angular offset 317 for fuel nozzles is 36 degrees.

FIG. 4 illustrates the fuel nozzle sector 314a of the inner liner 202 and/or the outer liner 204 that includes the fuel injection system 318a. The inner liner 202 and outer liner 204 are divided into centerline sectors 402 and midcup sectors (shown as half-midcup sectors 404 in the illustrated view of FIG. 4) that alternate circumferentially between the inner and outer forward nuggets 208, 210 and section the fuel nozzle sector 314a.

Accordingly, each fuel nozzle sector 314a-d includes a centerline sector 402 and two half-midcup sectors 404 defined on an outer side by cup midlines 310. The centerline sectors 402 and the half-midcup sectors 404 are defined by their widths measured in the circumferential dimension between the inner liner 202 and the outer liner 204 and the angle of their center with respect to the radial centerline plane 306 of FIG. 3. A centerline width 410 is an arc length measured along the surface of the centerline sector 402 between half-midcup sectors 404 that intersects the center 305 of the fuel injection system 318a. The centerline sector 402 is centered at the radial centerline plane 306 of the fuel injection system 318a.

Each half-midcup sector 404 is adjacent the cup midline 310 and/or the radial centerline plane 306. A half-midcup width 412 corresponds to an arc length measured along the surface of the half-midcup sector 404 between the cup midline 310 and/or the radial centerline plane 306 and an end of the centerline sector 402. In other words, the centerline sectors 402 and the half-midcup sectors 404 have a width measured along an axis (e.g., an axis along which widths 410, 412 are measured) between the inner liner 202 and the outer liner 204 corresponding to half the angular offset 317 between adjacent fuel injection systems 318a-d.

For example, the angular offset 317 between adjacent fuel injection systems 318a-d is 45 degrees. Thus, the width of the centerline sectors 402 or the sum of the half-midcup sectors 404 corresponds to a 22.5 degree angular offset. Accordingly, the sector tangential extension 316 corresponds to the centerline width 410 combined with double the half-midcup width 412 and/or to an arc length of the angular offset 317. In each of the inner liner 202, outer liner 204, and the forward nuggets 208, 210, the arrangement of cooling holes (not shown in FIG. 2, but shown in FIGS. 5-7) is varied between the centerline sectors 402 and the half-midcup sectors 404. Specifically, the tangential pitch/diameter between the cooling holes is varied between the centerline sectors 402 and the half-midcup sectors 404.

FIG. 5 is a portion 500 of the inner liner 202 of the combustion section 200. The inner liner 202 extends in the circumferential direction C (also referred to as the tangential direction) and the axial direction A with respect to the axial centerline axis 106. In the illustrated example of FIG. 5, the inner liner 202 includes centerline sectors 402, a midcup sector 504 (corresponding to the half-midcup width 412 of two half-midcup sectors 404), two half-midcup sectors 404, a plurality of inner liner cooling holes 506, and a plurality of dilution holes 508.

The angular value corresponding to the width of the centerline sectors 402, the midcup sectors 504, and the sum of the half-midcup sectors 404 is at least one of half of the angular offset 317 (22.5 degrees angular offset in the example of FIG. 3 or a 7.5 degree angular offset, as shown in the illustrated example of FIG. 5). Accordingly, the centerline width 410 is shown for the centerline sectors 402, and a width of the midcup sector 504 is shown so that a width of two half-midcup widths 412 is equivalent to the width of the midcup sector 504 (e.g., a sum of two half-midcup widths 412 is equal to the width of the midcup sector 504).

The arrangement of the inner liner cooling holes 506 can be characterized by a diameter 510 of the inner liner cooling holes 506, an axial pitch 512 between the inner liner cooling holes 506, and a tangential pitch 514 between the inner liner cooling holes 506. As shown in FIG. 5, the axial pitch 512 between the inner liner cooling holes 506 is the axial distance between the centers of adjacent inner liner cooling holes 506 in the inner liner 202. The tangential pitch 514 between inner liner cooling holes 506 is the circumferential distance between the centers of adjacent inner liner cooling holes 506 in the inner liner 202. The arrangement of the plurality of inner liner cooling holes 506, specifically the dimensional characteristics such as the diameter 510, the axial pitch 512, and the tangential pitch 514, determines the amount of airflow that is provided to the combustion chamber 216. The amount of airflow determines the level of cooling provided and also impacts the combustion process by introducing airflow into the combustion chamber 216.

The plurality of inner liner cooling holes 506 include a plurality of inner liner centerline sector cooling holes 516 and a plurality of inner liner midcup sector cooling holes 518. The inner liner centerline sector cooling holes 516 include a centerline tangential pitch 514A between the inner liner centerline sector cooling holes 516. Furthermore, the inner liner centerline sector cooling holes 516 are defined by a centerline diameter 510A. The inner liner midcup sector cooling holes 518 include a midcup tangential pitch 514B between the inner liner midcup sector cooling holes 518. Further, the inner liner midcup sector cooling holes 518 are defined by a midcup diameter 510B. Unlike the differential arrangement shown in the illustrated example of FIG. 5, conventional combustor liners include a consistent arrangement of the inner liner cooling holes 506 in the midcup sector 504 and centerline sector 402 of the inner liner 202, which do not provide an improved cooling benefit.

The arrangement of the plurality of inner liner centerline sector cooling holes 516 is different than the arrangement of the plurality of inner liner midcup sector cooling holes 518. The inner liner cooling holes 516, 518 are arranged such that the concentration or density of the inner liner centerline sector cooling holes 516 is higher than the concentration or density of the inner liner midcup sector cooling holes 518.

In other words, a ratio of the centerline tangential pitch 514A to the centerline diameter 510A is smaller than a corresponding ratio of midcup tangential pitch 514B to the midcup diameter 510B. In other words, the inner liner centerline cooling hole tangential pitch/diameter is smaller than the inner liner midcup cooling hole tangential pitch/diameter. This difference, which can be referred to as a differential cooling hole pattern, allows for a larger concentration of cooling air to be provided to the centerline sector 402 than the midcup sector 504. Accordingly, a greater density of the inner liner centerline sector cooling holes 516 are located in the centerline sector 402 than within the midcup sector 504. The centerline sector 402 experiences higher temperatures during the combustion process therefore greater cooling via the greater density of the inner liner centerline sector cooling holes 516 ensures continued operation of the gas turbine engine 100.

For example, the centerline tangential pitch 514A is 0.191 inches (4.85 mm) and the centerline diameter 510A is 0.030 inches (0.762 mm). Thus, the inner liner centerline cooling hole tangential pitch/diameter is 6.35. The midcup tangential pitch 514B is 0.414 (10.516 mm) inches and the midcup diameter 510B is 0.030 inches (0.762 mm). Thus, the inner liner midcup cooling hole tangential pitch/diameter is 13.79. The ratio of the inner liner midcup cooling hole tangential pitch/diameter to the inner liner centerline cooling hole tangential pitch/diameter is approximately 2.172: 1.

In the illustrated example of FIG. 5, the centerline tangential pitch 514A and the midcup tangential pitch 514B of the inner liner cooling holes 506 are the same in the centerline sector 402 and the midcup sector 504. In other examples, the centerline tangential pitch 514A is different than the midcup tangential pitch 514B.

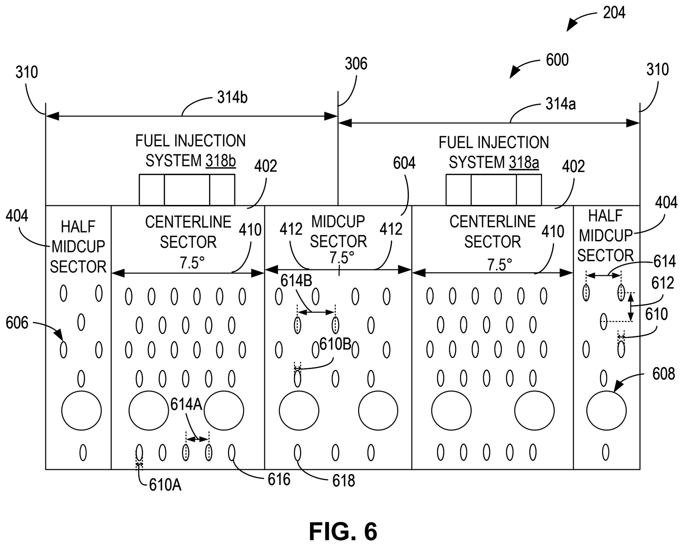

FIG. 6 is a portion 600 of an example outer liner 204 that may be implemented in the combustion section 200. The outer liner 204 extends in the circumferential direction C (also referred to as the tangential direction) and the axial direction A with respect to the axial centerline axis 106. In the illustrated example of FIG. 6, the outer liner 204 includes centerline sectors 402, a midcup sector 604, two half-midcup sectors 404, a plurality of outer liner cooling holes 606, and a plurality of dilution holes 608.

The angular value corresponding to a width of the centerline sectors 402, the midcup sector 604, and the sum of the half-midcup sectors 404 corresponds to at least one of half of the angular offset 317 (22.5 degrees angular offset in the example of FIG. 3 or a 7.5 degree angular offset, as shown in the illustrated example of FIG. 5). Accordingly, the centerline width 410 is shown for the centerline sectors 402, and a width of the midcup sector 604 is so that a width of two half-midcup widths 412 is equivalent to the width of the midcup sector 604 (e.g., a sum of two half-midcup widths 412 is equal to the width of the midcup sector 604).

The arrangement of the outer liner cooling holes 606 can be characterized by a diameter 610 of the outer liner cooling holes 606, an axial pitch 612 between the outer liner cooling holes 606, and a tangential pitch 614 between the outer liner cooling holes 606. As shown in FIG. 6, the axial pitch 612 between the outer liner cooling holes 606 is the axial distance between the centers of adjacent outer liner cooling holes 606 in the outer liner 204. The tangential pitch 614 between the outer liner cooling holes 606 is the circumferential distance between the centers of adjacent outer liner cooling holes 606 in the outer liner 204. The arrangement of the plurality of outer liner cooling holes 606, specifically the dimensional characteristics such as the diameter 610, the axial pitch 612, and the tangential pitch 614, determines the amount of airflow that is provided to the combustion chamber 216. The amount of airflow determines the level of cooling provided and also impacts the combustion process by introducing airflow into the combustion chamber 216.

The plurality of outer liner cooling holes 606 includes a plurality of outer liner centerline sector cooling holes 616 and a plurality of outer liner midcup sector cooling holes 618. The outer liner centerline sector cooling holes 616 include a centerline tangential pitch 614A between the outer liner centerline sector cooling holes 616 and are further defined by a centerline diameter 610A. Furthermore, the outer liner midcup sector cooling holes 618 include a midcup tangential pitch 614B between the outer liner midcup sector cooling holes 618 and are further defined by a midcup diameter 610B.

Unlike the differential arrangement shown in the illustrated example of FIG. 6, conventional combustor liners can include a consistent arrangement of the outer liner cooling holes 606 in the midcup sector 604 and centerline sectors 402 of the outer liner 204, which do not provide the improved cooling benefit. The arrangement of the plurality of outer liner centerline sector cooling holes 616 is different than the arrangement of the plurality of outer liner midcup sector cooling holes 618. The outer liner cooling holes 616, 618 are arranged such that the concentration or density of the outer liner centerline sector cooling holes 616 is higher than the concentration or density of the outer liner midcup sector cooling holes 618.

Therefore, a ratio of the centerline tangential pitch 614A to the centerline diameter 610A is smaller than a corresponding ratio of midcup tangential pitch 614B to the midcup diameter 610B. In other words, the outer liner centerline cooling hole tangential pitch/diameter is smaller than the outer liner midcup cooling hole tangential pitch/diameter. This difference, which can be referred to as a differential cooling hole pattern, allows for a larger concentration of cooling air to be provided to the centerline sector 402 than the midcup sector 604. Accordingly, a greater density of the outer liner centerline sector cooling holes 616 are located in the centerline sector 402 than within the midcup sector 604. The centerline sector 402 experiences higher temperatures during the combustion process therefore greater cooling via the greater density of the outer liner centerline sector cooling holes 616 ensures continued operation of the gas turbine engine 100.

For example, the outer liner centerline tangential pitch 614A is 0.251 inches (6.375 mm) and the outer liner centerline diameter 610A is 0.030 inches (0.762 mm). Thus, the outer liner centerline cooling hole tangential pitch/diameter is 8.37. The outer liner midcup tangential pitch 614B is 0.365 inches (9.271 mm) and the outer liner midcup diameter 610B is 0.030 inches (0.762 mm). Thus, the outer liner midcup cooling hole tangential pitch/diameter is 12.17. The ratio of the outer liner midcup cooling hole tangential pitch/diameter to the outer liner centerline cooling hole tangential pitch/diameter is approximately 1.454:1.

In the illustrated example of FIG. 6, the centerline tangential pitch 614A and the midcup tangential pitch 614B of the outer liner cooling holes 606 are the same in the centerline sector 602 and the midcup sector 604. In other examples, the centerline tangential pitch 614A is different than the midcup tangential pitch 614B.

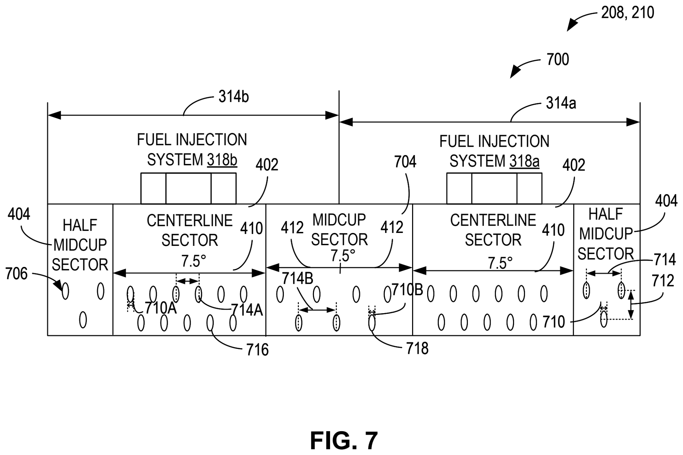

FIG. 7 is a portion 700 of the forward nuggets 208, 210 of the combustion section 200. The forward nuggets 208, 210 extend in the circumferential direction C and the axial direction A with respect to the axial centerline axis 106. In the illustrated example of FIG. 7, the forward nuggets 208, 210 includes the centerline sectors 402, a midcup sector 704, two half-midcup sectors 404, and a plurality of forward nuggets cooling holes 706.

The angular value corresponding to a width of the centerline sectors 402, the midcup sector 704, and the sum of the half-midcup sectors 404 is at least one of half of the angular offset 317 (22.5 degrees angular offset in the example of FIG. 3 or a 7.5 degree angular offset, as shown in the illustrated example of FIG. 5). Accordingly, the centerline width 410 is shown for the centerline sectors 402, and a width of the midcup sector 704 is shown so that a width of two half-midcup widths 412 is equivalent to the width of the midcup sector 704 (e.g., a sum of two half-midcup widths 412 is equal to the width of the midcup sector).

The arrangement of the forward nuggets cooling holes 706 can be characterized by a diameter 710 of the forward nuggets cooling holes 706, an axial pitch 712 between the forward nuggets cooling holes 706, and a tangential pitch 714 between the forward nuggets cooling holes 706. As shown in FIG. 7, the axial pitch 712 between the forward nuggets cooling holes 706 is the axial distance between centers of adjacent forward nuggets cooling holes 706. The tangential pitch 714 between forward nuggets cooling holes 706 is the circumferential distance between the center of adjacent forward nuggets cooling holes 706 in the forward nuggets 208, 210. The inventors determined that the arrangement of the plurality of forward nuggets cooling holes 706, specifically the dimensional characteristics such as the diameter 710, the axial pitch 712, and the tangential pitch 714, determines the amount of airflow that is provided to the combustion chamber 216. The amount of airflow determines the level of cooling provided and also impacts the combustion process by introducing airflow into the combustion chamber 216. The plurality of forward nuggets cooling holes 706 include a plurality of forward nuggets centerline sector cooling holes 716 and a plurality of forward nuggets midcup sector cooling holes 718. The forward nuggets centerline sector cooling holes 716 include a centerline tangential pitch 714A between the forward nuggets centerline sector cooling holes 716. Furthermore, the forward nuggets centerline sector cooling holes 716 are defined by a centerline diameter 710A. The forward nuggets midcup sector cooling holes 718 include a midcup tangential pitch 714B between the forward nuggets midcup sector cooling holes 718. Further, the forward nuggets midcup sector cooling holes 718 are defined by a midcup diameter 710B.

Unlike the differential arrangement shown in the illustrated example of FIG. 7, conventional combustor liners include a consistent arrangement of the forward nuggets cooling holes 706 in the midcup sector 704 and the centerline sector 402 of the forward nuggets 208, 210, which do not provide an improved cooling benefit.

The arrangement of the plurality of forward nuggets centerline sector cooling holes 716 is different than the arrangement of the plurality of forward nuggets midcup sector cooling holes 718. The forward nuggets cooling holes 716, 718 are arranged such that the concentration or density of the forward nuggets centerline sector cooling holes 716 is higher than the concentration or density of the forward nuggets midcup sector cooling holes 718.

In other words, a ratio of the centerline tangential pitch 714A to the centerline diameter 710A is smaller than a corresponding ratio of midcup tangential pitch 714B to the midcup diameter 710B. Therefore, the forward nuggets centerline cooling hole tangential pitch/diameter is smaller than the forward nuggets midcup cooling hole tangential pitch/diameter. This difference, which can be referred to as a differential cooling hole pattern, allows for a larger concentration of cooling air to be provided to the centerline sector 402 than the midcup sector 704. Accordingly, a greater density of the forward nuggets centerline sector cooling holes 716 are located in the centerline sector 402 than within the midcup sector 704. The centerline sector 402 experiences higher temperatures during the combustion process therefore greater cooling via the greater density of the forward nuggets centerline sector cooling holes 716 ensures continued operation of the gas turbine engine 100.

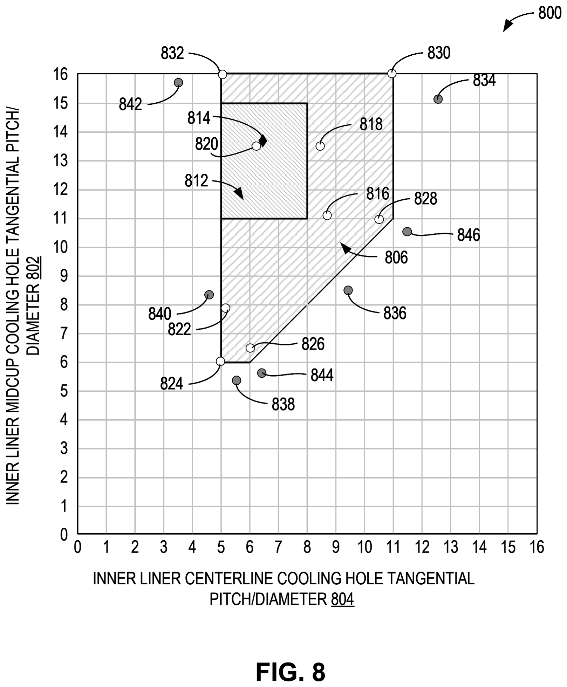

Referring now to FIGS. 8-10, the innovative designs developed by the inventors are shown in graphical form. The inventors developed several combustor liner designs, considering different types, sizes, and performance characteristics of combustor liners for small combustors. The innovative designs can be characterized and distinguished from designs that do not provide the same cooling benefit by comparing combustor liner cooling hole tangential pitch in the midcup and centerline sectors of the inner liner, outer liner, and forward nuggets.

Designs providing an improved cooling efficiency benefit over other designs can be characterized based on ratios of tangential pitch/diameter in midcup sectors to tangential pitch/diameter in centerline sectors of the inner liner, outer liner, and forward nuggets. As opposed to other, non-conforming designs, the innovative designs developed by the inventors match a demand for corrected cooling flux to the surface area, volume, and temperature environment of a combustion section during operation of a gas turbine engine. In particular, the innovative designs of the inventors result in uniform temperature and/or a low gradient of temperatures of the metal of the combustor liner between sectors of the combustor liner. Accordingly, a temperature difference is reduced between the temperature of the metal of the combustor liner between the centerline sector and the midcup sector. Further, the designs of the inventors result in cooling hole arrangements where the combustor liner is cooled to below the maximum temperature limit for the material of the combustor liner and a gradient of temperature between sectors of the combustor liner is reduced.

A combustor liner that is incapable of providing the improved cooling benefit does not satisfy the unexpected characteristics associated with the inventors' beneficial designs, and such a non-confirming design results in non-improved cooling efficiency for the gas turbine engine.

Table 1, below, provides example values corresponding to example improved combustor liner embodiments disclosed herein.

**TABLE 1**

| Combustor Liner | *TP*/*D_{IL,M}* | *TP*/*D_{IL,C}* | *TP*/*D_{OL,M}* | *TP*/*D_{OL,C}* | *TP*/*D_{FN,M}* | *TP*/*D_{FN,C}* |
|---|---|---|---|---|---|---|
| Examples | unitless | unitless | unitless | unitless | unitless | unitless |
| 1 | 13.79 | 6.35 | 12.17 | 8.37 | 5.33 | 3.23 |
| 2 | 11.14 | 8.76 | 17.64 | 14.21 | 5.44 | 3.79 |
| 3 | 13.52 | 8.34 | 14.38 | 11.13 | 4.71 | 3.42 |
| 4 | 13.48 | 6.14 | 9.17 | 5.61 | 4.07 | 2.18 |
| 5 | 7.87 | 5.15 | 13.41 | 7.74 | 6.15 | 3.11 |
| 6 | 6.00 | 5.00 | 8.00 | 5.00 | 4.00 | 2.00 |
| 7 | 6.25 | 6.00 | 8.25 | 8.00 | 4.25 | 4.00 |
| 8 | 11.00 | 10.50 | 16.00 | 15.60 | 5.00 | 4.80 |
| 9 | 16.00 | 11.00 | 19.00 | 16.00 | 7.00 | 5.00 |
| 10 | 16.00 | 5.00 | 19.00 | 5.00 | 7.00 | 2.00 |

The inventors of the present application determined that the embodiments disclosed herein that provide for increased cooling efficiency in small combustors are characterized by the differential cooling ratios of the cooling hole tangential pitch/diameters in the centerline sectors to the cooling hole tangential pitch/diameters in the midcup sectors of the combustor liner. The following expressions provide a metric representing this differential cooling hole arrangement in the inner liner, the outer liner, and the forward nuggets.

Expression (1) below characterizes the differential cooling in the inner liner, where *TP*/*D_{IL,M}* is the tangential pitch/diameter in the inner liner midcup sector and *TP*/*D_{IL,C}* is the tangential pitch/diameter in the inner liner centerline sector: $\frac{TP / {D}_{IL , M}}{TP / {D}_{IL , C}}$

Expression (2) below characterizes the differential cooling in the outer liner, where *TP*/*D_{OL,M}* is the tangential pitch/diameter in the outer liner midcup sector and *TP*/*D_{OL,C}* is the tangential pitch/diameter in the outer liner centerline sector: $\frac{TP / {D}_{OL , M}}{TP / {D}_{OL , C}}$

Expression (3) below characterizes the differential cooling in the forward nuggets, where *TP*/*D_{FN,M}* is the tangential pitch/diameter in the forward nuggets midcup sector and *TP*/*D_{FN,C}* is the tangential pitch/diameter in the forward nuggets centerline sector: $\frac{TP / {D}_{FN , M}}{TP / {D}_{FN , C}}$

Table 2, below, provides the values of the above expressions in the example combustor liner embodiments of Table 1 and further non-improved combustor liner designs. The values of expressions (1), (2), and (3) applied to the measurements of the cooling hole tangential pitch/diameter in the different regions of the combustor liners are represented in the columns "Inner Liner Ratio," "Outer Liner Ratio," and "Forward Nuggets Ratio," respectively.

**TABLE 2**

| Combustor Liner | *TP* /*D_{IL,M}* | *TP* /*D_{IL,C}* | *TP* /*D_{OL,M}* | ***TP*** /*D_{OL,C}* | *TP* /*D_{FN,M}* | *TP* /*D_{FN,C}* | Inner Liner Ratio | Outer Liner Ratio | Forward Nuggets Ratio |
|---|---|---|---|---|---|---|---|---|---|
| Examples | unitless | unitless | unitless | unitless | unitless | unitless | unitless | unitless | unitless |
| 1 | 13.79 | 6.35 | 12.17 | 8.37 | 5.33 | 3.23 | 2.17 | 1.45 | 1.65 |
| 2 | 11.14 | 8.76 | 17.64 | 14.21 | 5.44 | 3.79 | 1.27 | 1.24 | 1.44 |
| 3 | 13.52 | 8.34 | 14.38 | 11.13 | 4.71 | 3.42 | 1.62 | 1.29 | 1.38 |
| 4 | 13.48 | 6.14 | 9.17 | 5.61 | 4.07 | 2.18 | 2.20 | 1.63 | 1.87 |
| 5 | 7.87 | 5.15 | 13.41 | 7.74 | 6.15 | 3.11 | 1.53 | 1.73 | 1.98 |
| 6 | 6.00 | 5.00 | 8.00 | 5.00 | 4.00 | 2.00 | 1.20 | 1.60 | 2.00 |
| 7 | 6.25 | 6.00 | 8.25 | 8.00 | 4.25 | 4.00 | 1.04 | 1.04 | 1.04 |
| 8 | 11.00 | 10.50 | 16.00 | 15.60 | 5.00 | 4.80 | 1.05 | 1.03 | 1.04 |
| 9 | 16.00 | 11.00 | 19.00 | 16.00 | 7.00 | 5.00 | 1.45 | 1.19 | 1.40 |
| 10 | 16.00 | 5.00 | 19.00 | 5.00 | 7.00 | 2.00 | 3.20 | 3.80 | 3.50 |
| | | | | | | | | | |
| 11 | 15.12 | 12.49 | 17.55 | 17.32 | 6.17 | 5.61 | 1.21 | 1.01 | 1.10 |
| 12 | 8.56 | 9.23 | 12.22 | 13.85 | 4.34 | 4.85 | 0.93 | 0.88 | 0.89 |
| 13 | 5.23 | 5.56 | 5.98 | 7.12 | 3.67 | 3.54 | 0.94 | 0.84 | 1.04 |
| 14 | 8.34 | 4.53 | 10.35 | 4.24 | 4.25 | 1.75 | 1.84 | 2.44 | 2.43 |
| 15 | 15.75 | 3.56 | 18.25 | 3.75 | 6.67 | 1.23 | 4.42 | 4.87 | 5.42 |
| 16 | 5.80 | 6.50 | 7.50 | 8.20 | 3.82 | 4.05 | 0.89 | 0.92 | 0.94 |
| 17 | 10.60 | 11.50 | 15.80 | 16.40 | 4.92 | 5.15 | 0.92 | 0.96 | 0.96 |

Ranges for the tangential pitch/diameter in different sectors of a combustor liner to improve the cooling efficiency of the combustor liner of the gas turbine engine 100 are defined by the below values in Table 3. The columns "Inner Liner Ratio," "Outer Liner Ratio," and "Forward Nuggets Ratio," include Examples 1-10 of Table 2 that correspond to the differential cooling ranges for the inner liner, the outer liner, and the forward nuggets of Table 3. Examples 11-17 do not conform to the improved designs of the inventors because at least one parameter (e.g., the tangential pitch/diameter of the midcup, the tangential pitch/diameter of the centerline, the ratio of the tangential pitch/diameter of the midcup to the tangential pitch/diameter of the centerline) are not within the range of the parameters of Table 3. The cooling hole tangential pitch/diameter ratio in each of the different regions of the combustor liner is subject to a range of values for which the benefits of the present disclosure are realized. The ranges of the cooling hole tangential pitch/diameter ratio in each of the different regions of the combustor liner in addition to physical properties or characteristics of the engine and combustor liner in which these relationships are defined and valid are set forth below in Table 3:

**TABLE 3: Parameter Ranges**

| **Parameter (Units)** | **Description** | **Range** | **Differential Cooling Range** |
|---|---|---|---|
| *TP*/*D_{IL,M}* | Inner liner - midcup cooling hole tangential pitch/diameter | 6 ≤ *TP*/*D_{IL,M}* ≤ 16 | $1.00 < \frac{{\frac{TP}{D}}_{IL , M}}{{\frac{TP}{D}}_{IL , C}} \leq 3.20$ |
| *TP*/*D_{IL,C}* | Inner liner - centerline cooling hole tangential pitch/diameter | 5 ≤ *TP*/*D_{IL,C}* ≤ 11 | |
| *TP*/*D_{OL,M}* | Outer liner - midcup cooling hole tangential pitch/diameter | 8 ≤ *TP*/*D_{OL,M}* ≤ 19 | $1.00 < \frac{{\frac{TP}{D}}_{OL , M}}{{\frac{TP}{D}}_{OL , C}} \leq 3.80$ |
| *TP*/*D_{OL,C}* | Outer liner - centerline cooling hole tangential pitch/diameter | 5 ≤ *TP*/*D_{OL,C}* ≤ 16 | |
| *TP*/*D_{FN,M}* | FWD (Forward) Nuggets - midcup cooling hole tangential pitch/diameter | 4 ≤ *TP*/*D_{FN,M}* ≤ 7 | $1.00 < \frac{{\frac{TP}{D}}_{FN , M}}{{\frac{TP}{D}}_{FN , C}} \leq 3.50$ |
| *TP*/*D_{FN,C}* | FWD (Forward) Nuggets - centerline cooling hole tangential pitch/diameter | 2 ≤ *TP*/*D_{FN,C}* ≤ 5 | |

Through their work, the inventors determined that combustor liner designs with a ratio of the inner liner, outer liner, and/or forward nuggets midcup tangential pitch/diameter to the inner liner, outer liner, and/or forward nuggets centerline tangential pitch/diameter outside of the ranges provided in Table 3 do not provide an improved cooling benefit. In particular, combustor liners with inner liner, outer liner, and/or forward nuggets cooling hole arrangements that are less concentrated (e.g., increased tangential pitch/diameter) than the above ranges result in reduced combustion performance (e.g., decreased cooling function of the small combustor) because the cooling holes are spaced too far apart resulting in too high of a temperature of the metal of the combustor liner. However, combustor liners with inner liner, outer liner, and/or forward nuggets centerline and midcup cooling hole arrangements that are more concentrated (e.g., decreased tangential pitch/diameter) than the above ranges in Table 3 result in reduced combustion performance because the cooling holes are too close together such that a temperature of the liner is not consistent from the midcup sector to the centerline sector.

In particular, for concentrated cooling hole arrangements outside the above ranges, more holes are located in the midcup sector than the centerline sector which can cause an increase in temperature in the centerline sector where increased cooling is required. Further, concentrated cooling hole arrangements can exceed manufacturing tolerances and/or become difficult to manufacture due to potential collision of cooling holes with each other. Accordingly, combustion performance is negatively impacted due to the lack of cooling in the centerline sector as opposed to the midcup sector. Therefore, a ratio of the inner liner, outer liner, and/or forward nuggets midcup tangential pitch/diameter to the inner liner, outer liner, and/or forward nuggets centerline tangential pitch/diameter within the ranges provided in Table 3 results in increased combustion performance due to the decreased temperature gradient of the metal of the combustor liner between sectors of the combustor liner.

FIG. 8 shows a first graph 800 that relates an inner liner midcup cooling hole tangential pitch/diameter 802 (e.g., Y-axis) to an inner liner centerline cooling hole tangential pitch/diameter 804 (e.g., X-axis). The Y-axis of the first graph 800 represents the midcup cooling hole tangential pitch/diameter of the inner liner 202 and is an integer. The midcup cooling hole tangential pitch/diameter is calculated from the tangential pitch between the cooling holes in the midcup sector of the inner liner 202 and the diameter of the cooling holes in the midcup sector of the inner liner 202, as discussed above in connection with FIG. 5 and Tables 1-3. The X-axis of the first graph 800, representing a centerline cooling hole tangential pitch/diameter of the inner liner 202, is an integer. The centerline cooling hole tangential pitch/diameter is calculated from the tangential pitch between the cooling holes in the centerline sector of the inner liner 202 and the diameter of the cooling holes in the centerline sector of the inner liner 202, as discussed above in connection with FIG. 5.

A first design space 806 (shaded area) of FIG. 8 represents a range of inner liner differential cooling hole arrangements developed by the inventors that improve cooling efficiency in small combustors. The first design space 806 includes combustor liner designs developed by the inventors with a certain range of inner liner midcup cooling hole tangential pitch/diameter values for a given inner liner centerline cooling hole tangential pitch/diameter. In particular, the first design space 806 is bounded by a polygonal region defined by combustor liners having values for (*TP*/*D_{IL,C}, TP*/*D_{IL,M}*) between (5.00, 6.00), (6.00, 6.00), (11.00, 11.00), (11.00, 16.00), and (5.00, 16.00).

The combustor liner Examples 1-10, as described in Table 2 above, are shown in the first graph 800. Combustor liners, represented by points 814-832, correspond to Examples 1-10 indicated in Table 2 above, respectively, which the inventors developed and provide improved cooling (e.g., point 814 corresponds to Example 1, point 816 corresponds to Example 2, point 818 corresponds to Example 3, point 820 corresponds to Example 4, point 822 corresponds to Example 5, point 824 corresponds to Example 6, point 826 corresponds to Example 7, point 828 corresponds to Example 8, point 830 corresponds to Example 9, point 832 corresponds to Example 10). As shown, the boundary points 824, 830, 832 are located at vertices of the first design space 806. Further, the points 814, 816, 818, 820, 822, 826, 828 are located within the first design space 806. In particular, the point 824 and the point 830 are located at the smallest and largest vertex, respectively, in the first design space 806 for the *TP*/*D_{IL,C}, TP*/*D_{IL,M}.*

Examples of combustor liners that do not provide improved cooling and are not included in the first design space 806 are represented in Examples 11-17 of Table 2. Further, Examples 11-17 are shown in FIG. 8 as points 834-846 (e.g., point 834 corresponds to Example 11, point 836 corresponds to Example 12, point 838 corresponds to Example 13, point 840 corresponds to Example 14, point 842 corresponds to Example 15, point 844 corresponds to Example 16, point 846 corresponds to Example 17). Examples 11-17 denote example combustor liners that do not conform with the designs of the inventors and do not provide improved cooling based on the designs of the inventors. In some examples shown above in Table 2, ratios of the non-conforming combustor liners midcup pitch/diameter to centerline pitch/diameter fall within the ratios of the conforming designs, shown in Table 3. However, for these examples, the values of the midcup pitch/diameter and/or the centerline pitch/diameter do not conform with the inventive designs. Accordingly, for the combustor liner to conform with the inventive designs, the midcup pitch/diameter and centerline pitch/diameter values must be within certain parameters and within a certain range of values corresponding to a ratio of the midcup pitch/diameter to the centerline pitch/diameter, as set forth in Table 3.

The first design space 806 is defined by respective minimum and maximum values for the inner liner midcup cooling hole tangential pitch/diameter 802 and the inner liner centerline cooling hole tangential pitch/diameter 804. The inventors found that embodiments that provide for improved cooling can have inner liner midcup cooling hole tangential pitch/diameters varying between the values 6 and 16. Likewise, such embodiments can have inner liner centerline cooling hole tangential pitch/diameters (*TP*/*D_{IL,C}*) that vary between the values 5 and 11.

Within the first design space 806, the inventors of the present disclosure also determined that designs they developed that are within a second design space 812 (shaded area) of FIG. 8 represent a range of inner liner differential cooling hole arrangements that provide further improved cooling. In these examples, the second design space 812 can have improved cooling efficiency due to geometrical constraints causing dilution presence. Accordingly, the second design space 812 results in further reduced temperature gradients between sectors of the combustor liner. The inventors found that embodiments in the second design space 812 can have inner liner midcup cooling hole tangential pitch/diameters varying between the values 11 and 15. Likewise, such embodiments can have inner liner centerline cooling hole tangential pitch/diameters that vary between the values 5 and 8.

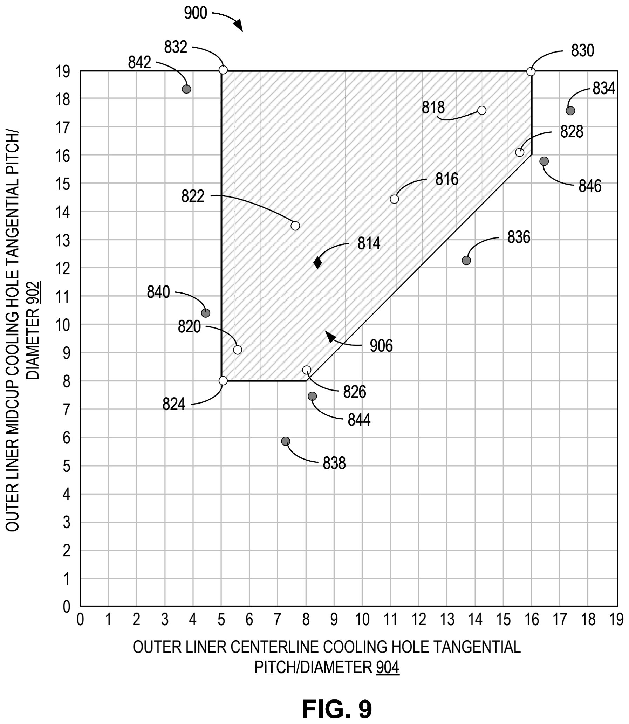

FIG. 9 shows a second graph 900 that relates an outer liner midcup cooling hole tangential pitch/diameter 902 (e.g., Y-axis) to an outer liner centerline cooling hole tangential pitch/diameter 904 (e.g., X-axis). The Y-axis of the second graph 900 represents the midcup cooling hole tangential pitch/diameter of the outer liner 204 and is an integer. The midcup cooling hole tangential pitch/diameter of the outer liner 204 is calculated from the tangential pitch between the cooling holes in the midcup sector of the outer liner 204 and the diameter of the cooling holes in the midcup sector of the outer liner 204, as discussed above in connection with FIG. 6. The X-axis of the second graph 900, representing a centerline cooling hole tangential pitch/diameter of the outer liner 204, is an integer. The centerline cooling hole tangential pitch/diameter is calculated from the tangential pitch between the cooling holes in the centerline sector of the outer liner 204 and the diameter of the cooling holes in the centerline sector of the outer liner 204, as discussed above in connection with FIG. 6 and Tables 1-3.

The inventors of the present disclosure determined that designs that they developed in a third design space 906 (shaded area) of FIG. 9 represent a range of outer liner differential cooling hole arrangements that improves cooling efficiency in small combustors. The third design space 906 defines a range of outer liner midcup cooling hole tangential pitch/diameter values for a given outer liner centerline cooling hole tangential pitch/diameter. In particular, the third design space 906 is bounded by a polygonal region defined by combustor liners having values for (*TP*/*D_{OL,C}, TP*/*D_{OL,M}*) between (5.00, 8.00), (8.00, 8.00), (16.00 ,16.00), (16.00, 19.00), and (5.00, 19.00).

The combustor liner Examples 1-10 as described in Table 2 above are shown in the second graph 900. Combustor liners, represented by points 814-832, correspond to Examples 1-10 indicated in Table 2 above, respectively, which were developed by the inventors and provide improved cooling (e.g., point 814 corresponds to Example 1, point 816 corresponds to Example 2, point 818 corresponds to Example 3, point 820 corresponds to Example 4, point 822 corresponds to Example 5, point 824 corresponds to Example 6, point 826 corresponds to Example 7, point 828 corresponds to Example 8, point 830 corresponds to Example 9, point 832 corresponds to Example 10). As shown, the points 824, 830, 832 are located at vertices of the third design space 906. Further, the points 814, 816, 818, 820, 822, 826, 828 are located within the third design space 906. In particular, the point 824 and the point 830 are located the smallest and largest vertex, respectively, in the third design space 906 for the *TP*/*D_{OL,C}, TP*/*D_{OL,M}.*

Examples of combustor liners that do not provide improved cooling and are not included in the third design space 906 are represented in Examples 11-17 of Table 2. Further, Examples 11-17 are shown in FIG. 9 as points 834-846 (e.g., point 834 corresponds to Example 11, point 836 corresponds to Example 12, point 838 corresponds to Example 13, point 840 corresponds to Example 14, point 842 corresponds to Example 15, point 844 corresponds to Example 16, point 846 corresponds to Example 17). Examples 11-17 denote example combustor liners that do not conform with the designs of the inventors and do not provide improved cooling based on the designs of the inventors. In some examples shown above in Table 2, ratios of non-conforming combustor liners midcup pitch/diameter to centerline pitch/diameter fall within the ratios of the conforming designs, shown in Table 3. However, for these examples, the values of the midcup pitch/diameter and/or the centerline pitch/diameter do not conform with the inventive designs. Accordingly, for the combustor liner to conform with the inventive designs, the midcup pitch/diameter and the centerline pitch/diameter values must be within certain parameters and within a certain range of values corresponding to a ratio of the midcup pitch/diameter to the centerline pitch/diameter, as set forth in Table 3.

The third design space 906 is defined by respective minimum and maximum values for the outer liner midcup cooling hole tangential pitch/diameter 902 and the outer liner centerline cooling hole tangential pitch/diameter 904. The inventors found that embodiments that provide for improved cooling can have outer liner midcup cooling hole tangential pitch/diameters ( *TP*/*D_{OL,M}*) varying between the values 8 and 19. Likewise, such embodiments can have outer liner centerline cooling hole tangential pitch/diameters (*TP*/*D_{OL,C}*) that vary between the values 5 and 16.

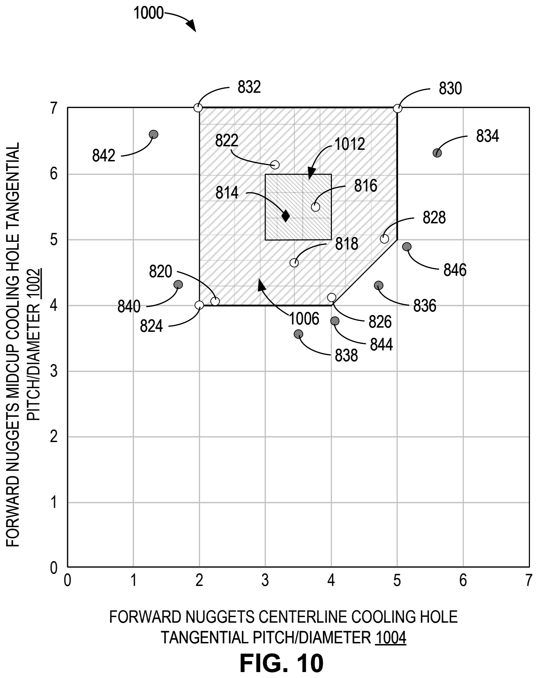

FIG. 10 shows a third graph 1000 that relates a forward nuggets midcup cooling hole tangential pitch/diameter 1002 (e.g., Y-axis) to a forward nuggets centerline cooling hole tangential pitch/diameter 1004 (e.g., X-axis). The Y-axis of the third graph 1000 represents the midcup cooling hole tangential pitch/diameter of the forward nuggets 208, 210 and is an integer. The midcup cooling hole tangential pitch/diameter is calculated from the tangential pitch between the cooling holes in the midcup sector of the forward nuggets 208, 210 and the diameter of the cooling holes in the midcup sector of the forward nuggets 208, 210, as discussed above in connection with FIG. 7. The X-axis of the third graph 1000, representing a centerline cooling hole tangential pitch/diameter of the forward nuggets 208, 210, is an integer. The centerline cooling hole tangential pitch/diameter is calculated from the tangential pitch between the cooling holes in the centerline sector of the forward nuggets 208, 210 and the diameter of the cooling holes in the centerline sector of the forward nuggets 208, 210, as discussed above in connection with FIG. 7 and Tables 1-3.

The inventors of the present disclosure determined that a fourth design space 1006 (shaded area) of FIG. 10 represents a range of forward nuggets differential cooling hole arrangements that improves cooling efficiency in small combustors. The fourth design space 1006 defines a range of forward nuggets midcup cooling hole tangential pitch/diameter values for a given forward nuggets centerline cooling hole tangential pitch/diameter. In particular, the fourth design space 1006 is bounded by a polygonal region defined by combustor liners having values for (*TP*/*D_{FN,C}, TP*/*D_{FN,M}*) between (2.00, 4.00), (4.00, 4.00), (5.00, 5.00), (5.00, 7.00), and (2.00, 7.00).

The combustor liner Examples 1-10, as described in Table 2 above, are shown in the third graph 1000. Combustor liners, represented by points 814-832, correspond to Examples 1-10 indicated in Table 2 above, respectively, which are developed by the inventors and provide improved cooling (e.g., point 814 corresponds to Example 1, point 816 corresponds to Example 2, point 818 corresponds to Example 3, point 820 corresponds to Example 4, point 822 corresponds to Example 5, point 824 corresponds to Example 6, point 826 corresponds to Example 7, point 828 corresponds to Example 8, point 830 corresponds to Example 9, point 832 corresponds to Example 10). As shown, the points 824, 830, 832 are located at the vertices of the fourth design space 1006. Further, the points 814, 816, 818, 820, 822, 826, 828 are located within the fourth design space 1006. In particular the point 824 and the point 830 are located at the smallest and largest vertex, respectively, in the fourth design space 1006 for the *TP*/*D_{FN,C}, TP*/*D_{FN,M}.*

Examples of combustor liners that do not provide improved cooling and are not included in the fourth design space 1006 are represented in Examples 11-17 of Table 2. Further, Examples 11-17 are shown in FIG. 10 as points 834-846 (e.g., point 834 corresponds to Example 11, point 836 corresponds to Example 12, point 838 corresponds to Example 13, point 840 corresponds to Example 14, point 842 corresponds to Example 15, point 844 corresponds to Example 16, point 846 corresponds to Example 17). Examples 11-17 denote example combustor liners that do not conform with the designs of the inventors and do not provide improved cooling based on the designs of the inventors. In some examples shown above in Table 2, ratios of the non-conforming combustor liners midcup pitch/diameter to centerline pitch/diameter fall within the ratios of the conforming designs, shown in Table 3. However, for these examples, the values of the midcup pitch/diameter and/or the centerline pitch/diameter do not conform with the inventive designs. Accordingly, for the combustor liner to conform with the inventive designs, the midcup pitch/diameter and centerline pitch/diameter values must be within certain parameters and within a certain range of values corresponding to a ratio of the midcup pitch/diameter to the centerline pitch/diameter, as set forth in Table 3.

The fourth design space 1006 is defined by respective minimum and maximum values for the forward nuggets midcup cooling hole tangential pitch/diameter 1002 and the forward nuggets centerline cooling hole tangential pitch/diameter 1004. The inventors found that embodiments that provide for improved cooling can have forward nuggets midcup cooling hole tangential pitch/diameters (*TP*/*D_{FN,M}*) varying between the values 4 and 7. Likewise, such embodiments can have forward nuggets centerline cooling hole tangential pitch/diameters (*TP*/*D_{FN,C}* ) that vary between the values 2 and 5.

Within the fourth design space 1006, the inventors of the present disclosure also determined that a fifth design space 1012 (shaded area) of FIG. 10 represents a range of forward nuggets differential cooling hole arrangements that further improve cooling. The inventors found that embodiments in the fifth design space 1012 can have forward nuggets midcup cooling hole tangential pitch/diameters varying between the values 5 and 6. Likewise, such embodiments can have forward nuggets centerline cooling hole tangential pitch/diameters that vary between the values 3 and 4.

In addition to the foregoing relationships identifying tangential pitch/diameters in different portions of the combustor liner engine properties where these relationships apply, further considerations can be made when designing a combustor liner. Such considerations include performance factors of the combustion section and/or the gas turbine engine 100.

Referring to these embodiments, the various combustor liners (disclosed above) conform to the parameter bounds set within the first, second, third, fourth, and/or fifth design spaces 806, 812, 906, 1006, 1012 while also satisfying performance factors mentioned below. For example, the temperature severity, corrected cooling flux, and/or required horsepower of the combustion section can influence the selection of the combustor liner. Certain designs or configurations of the combustion section can influence the temperature severity and horsepower of the combustion section and define the required cooling efficiency of the combustor liner.

Local temperature severity (TS) is a measurement of the heat produced by the combustion process for the different regions of the combustor. The temperature severity can be expressed as follows when *T*_{4*L*} and *T*₃ are in Fahrenheit (°F): ${T}_{4 L} + \frac{{T}_{4 L} - {T}_{3}}{3}$ where *T*_{4*L*} is the local flame temperature in the region calculated based on the fuel to air ratio in the combustor and *T*₃ is the coolant temperature of the liner.

The corrected cooling flux (CCF) is representative of the available coolant capability per unit area of the surface normalized to ambient conditions. The corrected cooling flux is expressed as follows: $\frac{{W}_{c}}{{A}_{s}} ∗ \frac{\sqrt{{T}_{3} \left[R\right] / {T}_{amb} \left[R\right]}}{{P}_{3} / {P}_{amb}}$ where *W_{C}* is the total coolant needed (at a specific location or in the entire system based on an area of the specific location or the entire system), *T*₃[*R*] is the coolant temperature on the Rankine scale, *T_{amb}[R]* is the ambient temperature on the Rankine scale, *P*₃ is the coolant pressure, *P_{amb}* is the ambient pressure, and *Aₛ* is the surface area of the liner to be cooled (at a specific location or in the entire system).

Some combustor liner embodiments, disclosed above (FIGS. 8-10), can provide the required cooling efficiency while complying with the first, second, third, fourth, and/or fifth design spaces 806, 812, 906, 1006, 1012. Through the design of these combustor liners, the inventors unexpectedly discovered the parametric relationships disclosed above.

Combustor liner embodiments (disclosed above) defined by the first, and/or second design spaces 806, 812, the third design space 906, and/or the fourth and/or fifth design spaces 1006, 1012 can implement the inner liner 202, the outer liner 204, and the forward nuggets 208, 210 of FIG. 2. The combustor liner embodiments 814-832 of Table 2 are example embodiments. Additional combustor liner embodiments of various configurations can be designed based on the disclosed relationships with inner liner midcup cooling hole tangential pitch/diameters, *TP*/*D_{IL,M}* , and inner liner centerline cooling hole tangential pitch/diameters, *TP*/*D_{IL,C},* that fall within the first design space 806 and/or the second design space 812, outer liner midcup cooling hole tangential pitch/diameters, *TP*/*D_{OL,M}* , and outer liner centerline cooling hole tangential pitch/diameters, *TP*/*D_{OL,C},* that fall within the third design space 906, and forward nuggets midcup cooling hole tangential pitch/diameters, *TP*/*D_{FN,M}*, and forward nuggets centerline cooling hole tangential pitch/diameters, *TP*/*D_{FN,C},* that fall within the fourth design space 1006 and/or the fifth design space 1012.

From the foregoing, it will be appreciated that disclosed relationships enable manufacture of combustor liners that can provide efficient differential cooling in small combustors. Disclosed parametric relationships can be used to expedite the design or selection process of cooling hole arrangements in the inner liner, outer liner, and forward nuggets of the combustor liner. Furthermore, the relationships between the cooling hole tangential pitch/diameter in the centerline sector and midcup sector of the inner liner, outer liner, and forward nuggets enables manufacture of a combustor liner to provide improved cooling for a small combustor while retaining engine performance capabilities. Accordingly, example combustor liners disclosed herein enable improved cooling efficiency of combustion section of a gas turbine engine without negatively impacting the combustion process.

Further aspects of the present disclosure are provided by the subject matter of the following clauses:
An example gas turbine engine includes a combustor having combustor volume (V), the combustor configured to burn fuel at a fuel flow rate (FFR) to generate an engine power (*P_{engine}*), and a combustor liner having a surface area (SA) including: an inner liner including a plurality of inner liner cooling holes configured to provide cooling to the combustor, the plurality of inner liner cooling holes characterized by an inner liner midcup cooling hole tangential pitch/diameter (*TP*/*D_{IL,M}*) between and inclusive of 6 and 16 and an inner liner centerline cooling hole tangential pitch/diameter (*TP*/*D_{IL,C}*) between and inclusive of 5 and 11, wherein values for a ratio of the ${\frac{TP}{D}}_{IL , M}$ to the ${\frac{TP}{D}}_{IL , C}$ are greater than 1.00; an outer liner including a plurality of outer liner cooling holes configured to provide cooling to the combustor, the plurality of outer liner cooling holes characterized by an outer liner midcup cooling hole tangential pitch/diameter ( ${\frac{TP}{D}}_{OL , M}$) between and inclusive of 8 and 19 and an outer liner centerline cooling hole tangential pitch/diameter ( ${\frac{TP}{D}}_{OL , C}$) between and inclusive of 5 and 16, wherein values for a ratio of the ${\frac{TP}{D}}_{OL , M}$ to the ${\frac{TP}{D}}_{OL , C}$ are greater than 1.00; and forward nuggets including a plurality of forward nuggets cooling holes configured to provide cooling to the combustor, the plurality of forward nuggets cooling holes characterized by a forward nuggets midcup cooling hole tangential pitch/diameter ( ${\frac{TP}{D}}_{FN , M}$) between and inclusive of 4 and 7 and a forward nuggets centerline cooling hole tangential pitch/diameter ( ${\frac{TP}{D}}_{FN , C}$) between and inclusive of 2 and 5, wherein values for a ratio of the ${\frac{TP}{D}}_{FN , M}$ to the ${\frac{TP}{D}}_{FN , C}$ are greater than 1.00, and wherein $\frac{SA}{V} > 10$.

The gas turbine engine of any preceding clause, wherein a FFR over *P_{engine}* is less than or equal to 0.5 pounds-mass per hour (lbm/h)/horsepower.

The gas turbine engine of any proceeding clause, further including ten to twenty fuel nozzles.

The gas turbine engine of any preceding clause, wherein the *TP*/*D_{IL,M}* is between 11 and 15 and the *TP*/*D_{IL,C}* is between 5 and 8.

The gas turbine engine of any preceding clause, wherein the *TP*/*D_{FN,M}* is between 5 and 6 and the *TP*/*D_{FN,C}* is between 3 and 4.

The gas turbine engine of any preceding clause, further including a plurality of fuel nozzles evenly spaced circumferentially about an axial centerline of the gas turbine engine.

The gas turbine engine of any preceding clause, wherein the combustor includes a plurality of fuel nozzle sectors corresponding to the plurality of fuel nozzles, each fuel nozzle sector including a centerline sector and two half-midcup sectors.

The gas turbine engine of any preceding clause, wherein a first width of the centerline sector and a combined second width of the two half-midcup sectors corresponds to a 7.5 degree angular offset.

The gas turbine engine of any preceding clause, wherein the combustion liner includes a plurality of dilution holes.

The gas turbine engine of any preceding clause, wherein the combustor liner is double-walled.

The gas turbine engine of any preceding clause, further including a plurality of swirlers evenly spaced circumferentially about an axial centerline of the gas turbine engine.

An example combustor includes: a combustion chamber having combustor volume (V), the combustor configured to burn fuel at a fuel flow rate (FFR) to generate an engine power (*P_{engine}*); and a combustor liner having a surface area (SA) including: an inner liner including a plurality of inner liner cooling holes configured to provide cooling to the combustor, the plurality of inner liner cooling holes characterized by an inner liner midcup cooling hole tangential pitch/diameter between and inclusive of 6 and 16 and an inner liner centerline cooling hole tangential pitch/diameter (*TP*/*D_{IL,C}*) between and inclusive of 5 and 11, wherein values for a ratio of the ${\frac{TP}{D}}_{IL , M}$ to the ${\frac{TP}{D}}_{IL , C}$ are greater than 1.00; an outer liner including a plurality of outer liner cooling holes configured to provide cooling to the combustor, the plurality of outer liner cooling holes characterized by an outer liner midcup cooling hole tangential pitch/diameter ( ${\frac{TP}{D}}_{OL , M}$) between and inclusive of 8 and 19 and an outer liner centerline cooling hole tangential pitch/diameter ( ${\frac{TP}{D}}_{OL , C}$) between and inclusive of 5 and 16, wherein values for a ratio of the ${\frac{TP}{D}}_{OL , M}$ to the ${\frac{TP}{D}}_{OL , C}$ are greater than 1.00; and forward nuggets including a plurality of forward nuggets cooling holes configured to provide cooling to the combustor, the plurality of forward nuggets cooling holes characterized by a forward nuggets midcup cooling hole tangential pitch/diameter ( ${\frac{TP}{D}}_{FN , M}$) between and inclusive of 4 and 7 and a forward nuggets centerline cooling hole tangential pitch/diameter ( ${\frac{TP}{D}}_{FN , C}$) between and inclusive of 2 and 5, wherein values for a ratio of the ${\frac{TP}{D}}_{FN , M}$ to the ${\frac{TP}{D}}_{FN , C}$ are greater than 1.00, and wherein $\frac{SA}{V} > 10$.

The combustor of any preceding clause, wherein a FFR over *P_{engine}* is less than or equal to 0.5 pounds-mass per hour (lbm/h)/horsepower.

The combustor of any proceeding clause, further including ten to twenty fuel nozzles.

The combustor of any preceding clause, wherein the *TP*/*D_{IL,M}* is between 11 and 15 and the *TP*/*D_{IL,C}* is between 5 and 8.

The combustor of any preceding clause, wherein the *TP*/*D_{FN,M}* is between 5 and 6 and the *TP*/*D_{FN,C}* is between 3 and 4.

The combustor of any preceding clause, further including a plurality of fuel nozzles evenly spaced circumferentially about an axial centerline of the combustor.

The combustor of any preceding clause, further including a plurality of fuel nozzle sectors corresponding to the plurality of fuel nozzles, each fuel nozzle sector including a centerline sector and two half-midcup sectors.

The combustor of any preceding clause, wherein a first width of the centerline sector and a combined second width of the two half-midcup sectors corresponds to a 7.5 degree angular offset.

The combustor of any preceding clause, wherein the combustor liner is double-walled.

The combustor of any preceding clause, further including a plurality of swirlers evenly spaced circumferentially about an axial centerline of the combustor.

The combustor of any preceding clause, wherein the combustion liner includes a plurality of dilution holes.

An example apparatus includes a combustor having combustor volume (V), the combustor configured to burn fuel at a fuel flow rate (FFR) to generate an engine power (*P_{engine}*); and a combustor liner having a surface area (SA) including: an inner liner including a plurality of inner liner cooling holes configured to provide cooling to the combustor, the plurality of inner liner cooling holes characterized by an inner liner midcup cooling hole tangential pitch/diameter between and inclusive of 6 and 16 and an inner liner centerline cooling hole tangential pitch/diameter (*TP*/*D_{IL,C}*) between and inclusive of 5 and 11, wherein values for a ratio of the ${\frac{TP}{D}}_{IL , M}$ to the ${\frac{TP}{D}}_{IL , C}$ are greater than 1.00; an outer liner including a plurality of outer liner cooling holes configured to provide cooling to the combustor, the plurality of outer liner cooling holes characterized by an outer liner midcup cooling hole tangential pitch/diameter ( ${\frac{TP}{D}}_{OL , M}$) between and inclusive of 8 and 19 and an outer liner centerline cooling hole tangential pitch/diameter ( ${\frac{TP}{D}}_{OL , C}$) between and inclusive of 5 and 6, wherein values for a ratio of the ${\frac{TP}{D}}_{OL , M}$ to the ${\frac{TP}{D}}_{OL , C}$ are greater than 1.00; and forward nuggets including a plurality of forward nuggets cooling holes configured to provide cooling to the combustor, the plurality of forward nuggets cooling holes characterized by a forward nuggets midcup cooling hole tangential pitch/diameter ( ${\frac{TP}{D}}_{FN , M}$) between and inclusive of 4 and 7 and a forward nuggets centerline cooling hole tangential pitch/diameter ( ${\frac{TP}{D}}_{FN , C}$) between and inclusive of 2 and 5, wherein values for a ratio of the ${\frac{TP}{D}}_{FN , M}$ to the ${\frac{TP}{D}}_{FN , C}$ are greater than 1.00, and wherein $\frac{SA}{V} > 10$.

The apparatus of any preceding clause, wherein a FFR over *P_{engine}* is less than or equal to 0.5 pounds-mass per hour (lbm/h)/horsepower.

The apparatus of any proceeding clause, further including ten to twenty fuel nozzles.

The apparatus of any preceding clause, wherein the *TP*/*D_{IL,M}* is between 11 and 15 and the *TP*/*D_{IL,C}* is between 5 and 8.

The apparatus of any preceding clause, wherein the *TP*/*D_{FN,M}* is between 5 and 6 and the *TP*/*D_{FN,C}* is between 3 and 4.

The apparatus of any preceding clause, further including a plurality of fuel nozzles evenly spaced circumferentially about an axial centerline of the gas turbine engine.

The apparatus of any preceding clause, wherein the combustor includes a plurality of fuel nozzle sectors corresponding to the plurality of fuel nozzles, each fuel nozzle sector including a centerline sector and two half-midcup sectors.

The following claims are hereby incorporated into this Detailed Description by this reference, with each claim standing on its own as a separate embodiment of the present disclosure.

## Claims

1. A combustor (130) comprising:
a combustion chamber (216) having combustor volume (V), the combustor configured to burn fuel at a fuel flow rate (FFR) to generate an engine power (*P_{engine}*); and
a combustor liner (200) having a surface area (SA) including:
an inner liner (202) including a plurality of inner liner cooling holes (506) configured to provide cooling to the combustor, the plurality of inner liner cooling holes **characterized by** an inner liner midcup cooling hole tangential pitch/diameter ( ${\frac{TP}{D}}_{IL , M}$) (802) between and inclusive of 6 and 16 and an inner liner centerline cooling hole tangential pitch/diameter ( ${\frac{TP}{D}}_{IL , C}$) (804) between and inclusive of 5 and 11, wherein values for a ratio of the ${\frac{TP}{D}}_{IL , M}$ to the ${\frac{TP}{D}}_{IL , C}$ are greater than 1.00;
an outer liner (204) including a plurality of outer liner cooling holes (606) configured to provide cooling to the combustor, the plurality of outer liner cooling holes **characterized by** an outer liner midcup cooling hole tangential pitch/diameter ( ${\frac{TP}{D}}_{OL , M}$) (902) between and inclusive of 8 and 19 and an outer liner centerline cooling hole tangential pitch/diameter ( ${\frac{TP}{D}}_{OL , C}$) (904) between and inclusive of 5 and 16, wherein values for a ratio of the ${\frac{TP}{D}}_{OL , M}$ to the ${\frac{TP}{D}}_{OL , C}$ are greater than 1.00; and
forward nuggets (208, 210) including a plurality of forward nuggets cooling holes (706) configured to provide cooling to the combustor, the plurality of forward nuggets cooling holes **characterized by** a forward nuggets midcup cooling hole tangential pitch/diameter ( ${\frac{TP}{D}}_{FN , M}$) (1002) between and inclusive of 4 and 7 and a forward nuggets centerline cooling hole tangential pitch/diameter ( ${\frac{TP}{D}}_{FN , C}$) (1004) between and inclusive of 2 and 5, wherein values for a ratio of the ${\frac{TP}{D}}_{FN , M}$ to the ${\frac{TP}{D}}_{FN , C}$ are greater than 1.00, and wherein $\frac{SA}{V} > 10$.

2. The combustor of any preceding claim, wherein the ${\frac{TP}{D}}_{IL , M}$ is between 11 and 15 and the ${\frac{TP}{D}}_{IL , C}$ is between 5 and 8.

3. The combustor of any preceding claim, wherein the ${\frac{TP}{D}}_{FN , M}$ is between 5 and 6 and the ${\frac{TP}{D}}_{FN , C}$ is between 3 and 4.

4. The combustor of any preceding claim, further including a plurality of fuel nozzles (212) evenly spaced circumferentially about an axial centerline (106) of the combustor.

5. The combustor of any preceding claim, further including a plurality of fuel nozzle sectors (318a-d) corresponding to the plurality of fuel nozzles, each fuel nozzle sector including a centerline sector (402) and two half-midcup sectors (404).

6. The combustor of any preceding claim, wherein a first width (410) of the centerline sector and a combined second width (412) of the two half-midcup sectors corresponds to a 7.5 degree angular offset.

7. The combustor of any preceding claim, wherein the combustor liner is double-walled.

8. The combustor of any preceding claim, further including a plurality of swirlers (214) evenly spaced circumferentially about the axial centerline of the combustor.

9. A gas turbine engine (100) comprising a compressor (112) and the combustor of any one of claims 1-8.
